(19) Europäisches Patentamt
European Patent Office
Office européen des brevets

(11) **EP 1 057 350 B1**

(12) **EUROPÄISCHE PATENTSCHRIFT**

(45) Veröffentlichungstag und Bekanntmachung des Hinweises auf die Patenterteilung:
**05.09.2001 Patentblatt 2001/36**

(51) Int Cl.[7]: **H04Q 7/32**

(21) Anmeldenummer: **99902491.2**

(22) Anmeldetag: **15.02.1999**

(86) Internationale Anmeldenummer:
**PCT/CH99/00070**

(87) Internationale Veröffentlichungsnummer:
**WO 99/41919 (19.08.1999 Gazette 1999/33)**

(54) **IDENTIFIZIERUNGSKARTE UND VERRECHNUNGSVERFAHREN MIT EINER IDENTIFIZIERUNGSKARTE**

IDENTIFICATION CARD AND BILLING PROCESS WITH AN IDENTIFICATION CARD

CARTE D'IDENTIFICATION ET PROCEDE DE COMPENSATION AU MOYEN D'UNE CARTE D'IDENTIFICATION

(84) Benannte Vertragsstaaten:
**AT CH DE FR GB LI NL**

(30) Priorität: **16.02.1998 CH 36798**

(43) Veröffentlichungstag der Anmeldung:
**06.12.2000 Patentblatt 2000/49**

(73) Patentinhaber: **Swisscom Mobile AG 3050 Bern (CH)**

(72) Erfinder: **RITTER, Rudolf CH-3052 Zollikofen (CH)**

(74) Vertreter: **BOVARD AG - Patentanwälte Optingenstrasse 16 3000 Bern 25 (CH)**

(56) Entgegenhaltungen:
EP-A- 0 186 038      EP-A- 0 656 733
WO-A-97/40616      FR-A- 2 613 101
US-A- 5 487 084

EP 1 057 350 B1

**Beschreibung**

Die vorliegende Erfindung bezieht sich auf ein Verrechnungsverfahren in einem Telekommunikationssystem. Die Erfindung betrifft insbesondere, aber nicht ausschliesslich, ein Verrechnungsverfahren, das mit einer Identifizierungskarte ausgeführt werden kann, sowie eine entsprechende Identifizierungskarte.

In Telekommunikationsnetzwerken, zum Beispiel in Telekommunikationsnetzwerken nach dem GSM-Standard, hängt die zu verrechnende Verbindungsgebühr von verschiedenen Parametern ab, unter anderem von der Dauer der Verbindung, von der Tageszeit und vom geographischen Standort des anrufenden und des angerufenen Benutzers. Diese Parameter, insbesondere die Verbindungsdauer, werden in der Infrastruktur des Netzes, zum Beispiel in einer Billingszentrale, ermittelt. Aus diesen Parametern wird dann die Verbindungsgebühr ermittelt und auf einem Konto des Benutzers beim Netzbetreiber oder bei einem Finanzinstitut belastet. Dieses Verrechnungsverfahren ist extrem aufwendig und teuer für den Netzbetreiber und verlangt ein komplexes Verrechnungssystem und viele manuelle oder halbautomatische Operationen.

Neben diesen Postpaid-Verrechnungsverfahren sind auch Prepaid-Systeme bekannt. Prepaid-Systeme benutzen meistens eine benutzerspezifische Identifizierungskarte, die ein Konto umfasst, welches mit einem Geldbetrag geladen werden kann. Die für die Verbindungen des Benutzers verrechneten Gebühren werden dann nach jeder Verbindung auf diesem Konto belastet; verschiedene Verfahren sind bekannt, um das Konto später nachzuladen. Die zur Ermittlung der verrechneten Gebühren benötigten Parameter sind unter dem Begriff CAI (Charge Advice Information) bekannt und werden in einer vom Netzbetreiber verwalteten Billingszentrale ermittelt und mit Signalisierungsmeldungen an die Identifizierungskarte des Benutzers übermittelt. Verarbeitungsmittel in der Karte zeigen dann den verrechneten Betrag auf der Anzeige des Mobilgeräts in der lokalen Währung an und belasten diesen Betrag dem gespeicherten Geldbetrag.

Prepaid-Verrechnungsverfahren sind meistens günstiger für den Netzbetreiber, da er keine Rechnung stellen muss. Die Berechnung der Verbindungsgebühren muss er jedoch stets durchführen. Ausserdem ist dieses Verfahren im GSM-Umfeld nur mit Geräten und in geographischen Bereichen anwendbar, in welchen die Funktion Advice of Charge (AOC), die im Standard ETSI ETS300 510 (entsprechend der technischen Spezifikation GSM 02.24) definiert ist, angewendet werden kann. Daher erlauben Prepaid-Karten meistens nur sehr eingeschränkte Roamingsmöglichkeiten und können häufig nur in einem einzigen Mobilfunknetz angewandt werden.

Es sind auch Prepaid-Verfahren im Zusammenhang mit Intelligent-Network-Lösungen bekannt. Diese Verfahren brauchen eine intelligente Netzinfrastruktur (INI), sind teuer einzusetzen und ebenfalls nur im Netz des betreffenden Netzbetreibers anwendbar.

Es ist folglich ein Ziel der Erfindung, ein verbessertes Verrechnungsverfahren vorzuschlagen, welches nicht die Nachteile der bekannten Verfahren aufweist, insbesondere ein für den Netzbetreiber vereinfachtes Verrechnungsverfahren.

Erfindungsgemäss werden diese Ziele mit Hilfe einer im unabhängigen Identifizierungskartenanspruch beschriebenen Identifizierungskarte und mit einem in den unabhängigen Verfahrensansprüchen beschriebenen Verfahren erreicht, wobei verschiedene Varianten in den abhängigen Ansprüchen beschrieben werden.

Das erfindungsgemässe Verrechnungsverfahren erfolgt mit einer Identifizierungskarte für Benutzer eines Endgerätes, die in wegnehmbarer Weise in das Endgerät eingeführt werden kann und die ausser konventionellen Datenverarbeitungsmitteln, welche das Speichern von Daten ermöglichen, die mindestens Identifikationsdaten (IMSI (International Mobile Subscriber Identity), MSISDN (Mobile Station Identity Number) und/oder optional IDUI (International Debit User Identification) des Benutzers enthalten, auch eine integrierte Zeitmessvorrichtung enthält, mit der die Dauer der Verbindung ermittelt wird, sowie Rating-Mittel (1014), mit denen die zu verrechnende Gebühr in Abhängigkeit von der mit der integrierten Zeitmessvorrichtung (100) gemessenen Verbindungsdauer und Verbindungszeit ermittelt wird. Die integrierte Zeitmessvorrichtung wird mit einem externen Taktsignal, z.B. aus dem Endgerät, synchronisiert.

Falls die Identifizierungskarte in verschiedenen Mobilgeräten eingesetzt wird, die verschiedene Quarzelemente mit verschiedenen Quarzfrequenzen anwenden können, z.B. Frequenzen zwischen 3,5 und 5,5 MHz, wird vorzugsweise diese Frenquenz mit dem eingebauten Oszillator der Zeitmessvorrichtung ermittelt und der Teilungsfaktor im Frequenzteiler wird entsprechend angepasst. Vorzugsweise wird mit dieser Information zusätzlich noch der Mobilgerättyp, z.B. die Marke des Mobilgeräts, erkannt und im Speicherbereich der Identifizierungskarte für weitere Zwecke gespeichert.

Dadurch können alle für die Berechnung der verrechneten Gebühr benötigten Parameter direkt in der Karte ermittelt werden, so dass alle Gebührenberechnungen an der Quelle beim Benutzer erfolgen können.

Der ermittelte Betrag kann dann entweder direkt auf einem Prepaid-Konto auf der Identifizierungskarte abgebucht werden und/oder, im Fall einer Postpaid-Karte, in einem Billingsbeleg verpackt und an einen Billingskollektor im Telekommunikationsnetz übermittelt werden.

Das Patentdokument EP656733 beschreibt ein Verrechnungssystem für Mobilgeräte, in welchem alle Verbindungsparameter, die zur Ermittlung der verrechnenden Gebühr nötig sind, im Speicher des Mobilgeräts gespeichert sind. Dieser Betrag kann dann auf der Anzeige des Mobilgeräts zur Information angezeigt werden. Es ist jedoch in diesem Dokument nicht beschrieben, wie die ermittelte Gebühr automatisch verrechnet werden kann. Ausserdem werden die Verbindungsdauer und die Verbindungszeit mit Hilfe der internen Uhr des Mobilgeräts ermittelt. Der Netzbetreiber hat keinen Einfluss auf die Genauigkeit der Uhr in von anderen Herstellem angebotenen Mobilgeräten. Diese Uhr kann in den meisten Mobilgeräten von den Benutzem eingestellt werden, so dass ein Missbrauch leicht möglich ist, indem die Uhr auf eine günstigere Tarifperiode eingestellt wird

Das Patentdokument FR2680261 beschreibt eine Telefon-Chipkarte, die ein Prepaid-Konto sowie Tariftabellen enthält. Die verrechneten Gebühren für die Verbindungen werden aus dem Prepaid-Konto in Abhängigkeit von der Verbindungsdauer und der gespeicherten Tarife ermittelt. Die Zeit und die Dauer der Verbindungen werden ebenfalls in einer externen Vorrichtung ermittelt.

Erfindungsgemäss wird stattdessen die gesamte Zeitmessvorrichtung, ausser dem Quarz, in die vom Netzbetreiber zu Verfügung gestellte Chipkarte integriert, so dass sie nicht vom Benutzer oder vom Mobilgeräthersteller eingestellt oder beeinflusst werden kann. Verschiedene Mechanismen erlauben es ausserdem, die Genauigkeit und den Gang der Zeitmessvorrichtung aus einem Zeitserver im Netz zu überprüfen.

Eine SIM-Karte mit einer Dauermessvorrichtung ist schon von WO96/11545 bekannt. Diese Karte kann nur während einer in einem Timer in der Karte geladenen Zeit verwendet werden. Dieses Dokument beschreibt jedoch nicht, wie man die Verbindungsgebühren automatisch dem Kunden belasten kann.

EP770953 beschreibt eine andere Chipkarte mit integrierter Zeitmessvorrichtung, die jedoch nur zur Signierung von elektronischen Dokumenten und nicht für die Verrechnung von Verbindungen verwendet wird.

Eine SIM-Karte mit einem integrierten Taktgeber ("clock"), der zur Ermittlung der Verbindungs-Dauer angewendet werden kann, ist als Variante in der Patentanmeldung W097/40616 beschrieben. Dieses Dokument beschreibt jedoch nicht, wie der Taktgeber synchronisiert werden kann. Zum Zeitpunkt dieser Anmeldung war es nicht bekannt, wie man einen Quarz in eine Chipkarte einbauen kann. Eine nicht synchronisierte, elektronische Uhr hat eine Genauigkeit von ungefähr einem Prozent oder ungefähr einer Viertelstunde im Tag; ausserdem wird die Möglichkeit nicht erwähnt, dass eine Uhrzeit geprüft und ferngesteuert werden kann. Die beschriebene SIM-Karte kann daher kaum für eine genaue Gebührenberechnung angewandt werden.

Ausserdem enthält die in W097/40616 beschriebene SIM-Karte keinen vorbezahlten Geldbetrag, so dass eine zweite Prepaid-Karte mit einem elektronisch gespeicherten Geldbetrag erforderlich ist Die beiden Karten müssen gleichzeitig oder nacheinander im Mobilgerät eingesteckt werden; eine umfangreiche Änderung der Mobilgeräte ist daher erforderlich, damit sie zwei verschiedene Chipkarten empfangen können. Dieses System kann daher kaum für moderne, miniaturisierte Mobilgeräte angewandt werden.

Im Gegenteil dazu kann in der erfindungsgemässen Identifizierungskarte die Uhr sehr präzis laufen, weil sie mit einem externen Taktsignal, zum Beispiel aus einem Quarz im Mobilgerät, synchronisiert wird. Ausserdem kann die eingestellte Zeit zu jeder Zeit von einer Zentrale geprüft, und falls notwendig, angepasst werden. Höchstens minimale Anpassungen an die Mobilgeräte werden benötigt, um das erfindungsgemässe Verfahren anzuwenden.

In der Patentanmeldung FR 2 613 101 A1 wird eine Chipkarte, insbesondere eine Karte für Zahlungszwecke, beschrieben, welche über Kontakte mit einer externen Vorrichtung, beispielsweise ein Kartenleser, verbunden werden kann. Die in der Patentanmeldung FR 2 613 101 A1 beschriebene Chipkarte umfasst zudem einen Schnittstellenschaltkreis mit einem Frequenzteiler, mittels dessen die Taktrate eines von der externen Vorrichtung gelieferten Taktsignals herunterdividiert werden kann, so dass in der Karte aus dem von der extemen Vorrichtung gelieferten Taktsignal eine geeignete Taktrate für die Datenübertragung zwischen der Karte und der externen Vorrichtung abgeleitet werden kann.

Die vorliegende Erfindung wird mit Hilfe der Beschreibung besser verständlich, welche als Beispiel angeführt ist und durch die Figuren dargestellt wird, wobei:

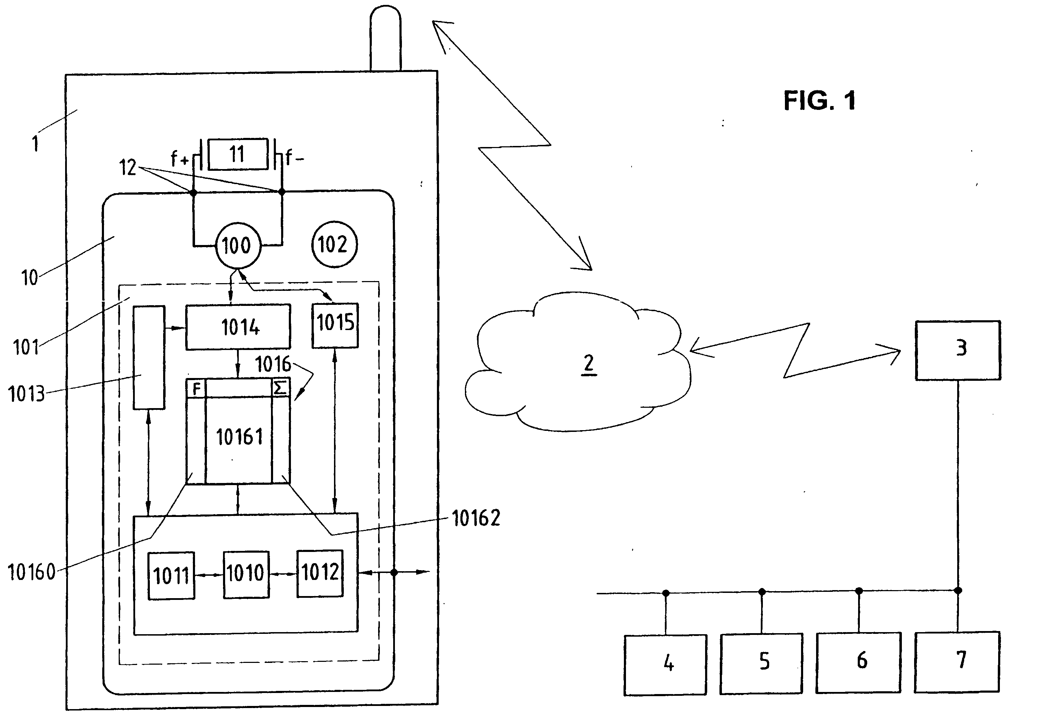

Die Figur 1 ein Blockschema eines erfindungsgemässen Systems mit einer erfindungsgemässen Identifizierungskarte schematisch zeigt.

Die Figur 2 ein Diagramm zeigt, das die Übermittlung der verschiedenen Prübelege erläutert.

Die Figur 3 schematisch die Struktur eines Zeiteinstellungsbelegs zeigt.

Mit dem Bezugszeichen 1 ist ein Endgerät symbolisch dargestellt, zum Beispiel ein GSM-Mobilfunktelefon oder eine programmierbare Vorrichtung mit Kommunikationsmöglichkeiten. Das Endgerät 1 enthält ein wegnehmbares Identifizierungselement 10, zum Beispiel eine SIM-Karte 10 (Subscriber Identity Module), die den Benutzer im Telekommunikationsnetz 2 identifiziert. SIM-Karten sind zum Beispiel in der technischen Spezifikation GSM 11.11 und GSM 11.14 beschrieben, die seit 1995 bzw. 1996 beim Sekretariat des European Telecommunications Standards Institute, F-06921 Sophia Antipolis, erhältlich ist. Andere SIM-Karten werden auch in GSM-, DCS-, UMTS- oder PCS-Mobilgeräten eingesetzt oder auch in zukünftigen Fixnetzen mit Benutzeridentifizierung durch Chipkarten. Die SIM-Karte kann entweder eine Full-Size-Chipkarte oder eine Plug-in-Karte sein ; sie wird durch ein nicht dargestelltes Kontaktgebiet auf der Oberfläche der Karte mit dem Endgerät 1 verbunden. Andere elektronische Identifizierungselemente, andere Kartenformate und kontaktlose Karten können aber auch im Rahmen dieser Erfindung angewandt werden, zum Beispiel Mehrzweckkarten, die unter dem Begriff Opencard bekannt sind.

Die SIM-Karte 10 enthält Datenverarbeitungsmittel 101, zum Beispiel einen bekannten GSM-SIM-Mikrokontroller. Die SIM-Karte enthält ausserdem bekannte Mittel 1010, um spezielle Kurzmeldungen, zum Beispiel SMS- oder USSD-Kurzmeldungen, zu senden und zu empfangen, sowie vorzugsweise bekannte Filtermittel 1011, um spezielle Kurzmeldungen zu erkennen und zwischenzuspeichern, vorzugsweise gemäss dem SICAP-Verfahren, das unter anderem im Patent EP 0689 368 B1 beschrieben ist. Verschlüsselungs- und Signierungsmittel 1012 sind ausserdem vorzugsweise vorhanden, um gesandte Dateien zu verschlüsseln und zu signieren, bzw. um empfangene Daten zu entschlüsseln und deren Signatur zu prüfen. Als Verschlüsselungs- und Signierungsverfahren kann beispielsweise das TTP-Verfahren (Trusted Third Party) eingesetzt werden, oder auch Verschlüsselungsmittel, die nach einem Point-to-Point-Verfahren arbeiten.

Erfindungsgemäss enthält die SIM-Karte 10 zusätzlich eine integrierte Zeitmessvorrichtung 100, mit der die Zeit und die Dauer von Operationen, z.B. von Verbindungen, ermittelt werden können. Die Zeitmessvorrichtung kann Hardware- und eventuell auch Software-Mittel enthalten. In einer bevorzugten Variante umfasst jedoch die Zeitmessvorrichtung eine Uhr mit einem Oszillator und einem Frequenzteiler bekannten Typs sowie vorzugsweise von der Uhrentechnologie bekannte Kompensationsmittel, um temperaturbedingte Gangabweichungen zu kompensieren. Die gesamte Zeitmessvorrichtung ist in der Chipkarte integriert ; sie wird jedoch mit einem extemen Frequenzsignal f+, f- aus dem Mobilgerät 1 synchronisiert. Das Frequenzsignal f+, f- wird vorzugsweise von einem ohnehin vorhandenen Quarzelement 11 im Mobilgerät 1 generiert, und an die SIM-Karte 1 übermittelt. Dieses Frequenzsignal wird ohnehin meist durch die üblichen Kontaktflächen (12) auf der Oberfläse der Karten übertragen; falls dies nicht der Fall wäre, kann optionnal eine neue Schnittstelle zwischen der Karte und das Mobilgerät zu diesem Zweck definiert werden. Eine kontaktlose Schnittstelle 12 zwischen dem Mobilgerät 1 und der Karte 10 kann aber auch angewandt werden. Vorzugsweise wird die Zeitmessvorrichtung 100 durch einen in der Karte 10 enthaltenen Energiespeicher 102, zum Beispiel ein Akkumulator oder Kondensator, gespiesen, wenn das Endgerät ausgeschaltet ist.

Falls die SIM-Karte 10 in verschiedenen Mobilgeräten 1 eingesetzt wird, die verschiedene Quarzelemente mit unterschiedlichen Quarzfrequenzen anwenden, z.B. unterschiedliche Frequenzen zwischen 3,5 und 5,5 MHz. wird vorzugsweise die benutzte Frequenz mit dem Oszillator der Zeitmessvorrichtung 100 ermittelt. Der Teilungsfaktor im integrierten Frequenzteiler wird dann entsprechend angepasst.

Die benutzte Frequenz des Signals f+, f- gibt meistens die Marke oder den Typ des Mobilgeräts 1 an. Diese Information wird vorzugsweise erkannt und im Speichbereich der SIM-Karte 10 für weitere Zwecke temporär gespeichert.

Der Mikrokontroller 101 führt die verschiedenen Prozesse in der Karte aus. Ein implizit dargestellter Speicher, zum Beispiel eine EEPROM, ist im Mikrokontroller 101 enthalten oder mit ihm verbunden. Der Speicher enthält Programme und Dateien, die vorzugsweise in einer hierarchischen Verzeichnisstruktur organisiert sind. Der Speicher umfasst mindestens einen Sicherheitsbereich mit Dateien und Komponenten, die der Benutzer nicht ändern kann. In diesem gesicherten Bereich können Daten und Programme, zum Beispiel Java-Applets, nur während der Erstellung der SIM-Karte mit einem gesicherten Prozess innerhalb der SIM-Karte, oder später aus der Infrastruktur 3-7 mit signierten Belegen geladen beziehungsweise verändert werden. Im gesicherten Bereich sind ausser konventionellen GSM-Daten und - Programmen zusätzlich noch Programme für die TTP-Verschlüsselungs- und Signierungsfunktionen 1012 enthalten sowie mindestens ein privater und/oder mindestens ein öffentlicher Schlüssel. Erfindungsgemäss ist in diesem Bereich noch ein Zeitmessvorrichtungs-Einstellungsregister 1015 enthalten, mit dem die Zeitmessvorrichtung 100 eingestellt werden kann. Ein Rating-System 1014 besteht aus Programmodulen und Daten in diesem gesicherten Bereich, mit denen die Verbindungsgebühren in Abhängigkeit der mit der Zeitmessvorrichtung 100 ermittelten Verbindungsdauer und Verbindungszeit berechnet werden können. Die Tarifkomponenten für diese Berechnung sind in einer Tariftabelle 1013 in diesem gesicherten Bereich gespeichert. Die Tariftabelle 1013 und das Einstellungsregister 1015 können mit speziellen SMS oder USSD-Meldungen aus der Netzinfrastruktur aktualisiert werden, wie weiter unten beschrieben.

Der gesicherte Bereich enthält noch eine Rating-Tabelle 1016 mit allen erfassten Verbindungseinzelheiten (Call Details), die für die Verrechnung jeder einzeln durchgeführten Verbindung benötigt wird. Jede Zeile in dieser Tabelle entspricht einer bestimmten durchgeführten Verbindung oder sonst verrechneten Operation mit der Karte 10. Die erste Kolonne 10160 in der Tabelle 1016 enthält ein Flag, das angibt, ob die entsprechenden Verbindungseinzelheiten schon an den Billingskollektor 4 übertragen worden sind. Die zweite Kolonne 10161 enthält alle Verbindungseinzelheiten, wie zum Beispiel Verbindungstageszeit, Verbindungsdauer, Standort des Benutzers A, Standort des Benutzers B, usw., sowie die Verbindungsgebühr, die das Rating-System aus diesen Daten und aus der Tariftabelle 1013 berechnet hat In einer bevorzugten Variante enthält diese Kolonne alle im GSM-Umfeld bekannten CDR-Komponenten (Call Detail Records).

Wie schon erwähnt, kann die vorliegende Erfindung für Prepaid-Karten sowohl als auch für Postpaid-Karten angewandt werden. Im Fall einer Prepaid-Karte enthält die letzte Kolonne 10162 den vorbezahlten Restbetrag auf der Karte. Die nach jeder Verbindung ermittelte Gebühr im Feld 10161 wird von diesem Betrag subtrahiert. Wenn der Restbetrag 10162 kleiner oder gleich Null ist, wird die SIM-Karte gesperrt oder mindestens für alle Nummern gesperrt, ausser einigen Rufnummern, Dienstnummern und sonstige Gratisnummern, die in einer speziellen Datei gespeichert sind. Die SIM-Karte kann erst dann wieder benutzt werden, wenn sie mit einem Geldbetrag nachgeladen wird, vorzugsweise mittels speziellen Nachlademeldungen aus der Infrastruktur. Geeignete Methoden, um einen Geldbetrag in einer SIM-Karte nachzuladen sind schon bekannt und werden zum Beispiel schon von der Anmelderin für den unter dem kommerziellen Namen bekannten EASY-Dienst benutzt. Die Patentanmeldung EP96810570.0 beschreibt die wichtigsten Teile dieses Prozesses.

Das erfindungsgemässe Verfahren kann auch für ein Postpaidsystem angewandt werden. In diesem Fall enthält die dritte Kolonne 10162 die Summe der erfassten Gebühr für alle nicht verrechneten Verbindungen. Vorzugsweise wird die SIM-Karte ebenfalls völlig oder teilweise gesperrt, wenn die Summe 10162 eine vom Netzbetreiber oder vom Kunden definierte Limite übersteigt.

Die für jede Verbindung ermittelte Gebühr in der Kolonne 10161 wird vorzugsweise nach jeder Verbindung oder schon während dieser Verbindung auf der Anzeige des Mobilgeräts 1 angezeigt. Der Restbetrag bzw. die Summe 10162 kann vorzugsweise ebenfalls zu jeder Zeit angezeigt werden. In einer Variante und je nach Mobilgerät können ebenfalls alle Verbindungseinzelheiten im Feld 10161 angezeigt werden.

Nicht dargestellte Mittel werden vorzugsweise vorgesehen, um die Rating-Tabelle 1016 teilweise oder komplett zu löschen. Vorzugsweise werden die schon mit dem Flag 10160 als übermittelt angegebenen Verbindungseinzelheiten nach einem vordefinierten oder frei wählbaren Zeitintervall automatisch gelöscht. Die SIM-Karte 10 wird vorzugsweise gesperrt, wenn die Tabelle 1016 keinen Platz mehr für neue Verbindungen enthält; in diesem Fall bleibt nichts anderes mehr übrig, als Verbindungseinzelheiten 10161 mit einer geeigneten Routine an den Zeitserver zu übertragen und aus der Tabelle 1016 zu löschen.

Um Speicherplatz zu sparen, können in einer Variante die meist sehr redundanten Daten in der Tabelle 1016 mit einem geeigneten Algorithmus komprimiert werden.

Andere optional gespeicherte Identifizierungsparameter im Sicherheitsbereich der SIM-Karte erlauben es, die SIM-Karte 1 auch als Identifizierungskarte für ein anderes System zu benutzen, zum Beispiel als Identifizierungskarte in einem anderen Telekommunikationsnetz, für ein externes Gerät, in einem Network Computing Gerät NC, in einem Mobile Network Computing Gerät MNC, in einem PAY-TV-Dekoder oder mit allen anderen denkbaren Geräten, wo eine Benutzeridentifizierung mit Chipkarte anwendbar ist. In diesem Fall kann das erfindungsgemässe Verfahren auch für die Verrechnung dieser zusätzlichen Anwendungen angewandt werden. Entsprechende Benutzungseinzelheiten werden ebenfalls in der Tabelle 1016 gespeichert.

Die SIM-Karte 1 ist mit einem Telekommunikationsnetz 2, beispielsweise mit einem GSM-Netz, verbunden, wenn sie im Endgerät 1 steckt. Ein SIM-Server 3 ist ebenfalls an das Netz 2 angeschlossen und kann mit der Karte 10 durch spezielle Meldungen, z.B. SMS-oder USSD-Meldungen, über das Netz 2 kommunizieren. Bekannte Filtermittel im Server 3 erlauben es, Dateien, Instruktionen und Programme (z.B. Programme in einer Objekt-Orientierten Sprache wie JAVA™) zwischen dem SIM-Server und einer mit den erwähnten Filtermittel 1010, 1011 ausgerüsteten Identifizierungskarte 10 auszutauschen. Vorzugsweise ist ausserdem der SIM-Server 3 mit einem TTP-Server 7 verbunden, um eine gesicherte Kommunikation mit den SIM-Karten 10 zu erlauben. Dadurch wird versichert, dass die Vertraulichkeit, Authentizität der Identität, Authentizität der Information, Integrität und Nichtabstreitbarkeit des Ursprungs der verschiedenen Mitteilungen gewährleistet sind. Ein Point-to-Point Verschlüsselungs- und Signierungs-Verfahren kann aber auch eingesetzt werden.

Der SIM-Server 3 ist ebenfalls mit einem Zeitserver 5 verbunden, der die in der SIM-Karte 10 eingebaute Zeitmessvorrichtung setzt und kontrolliert, wie weiter unten beschrieben. Ein autorisierter Tarifserver 6 setzt und kontrolliert die in der SIM-Karte eingebaute Tariftabelle. Ein Billing-Kollektor 4 kann Daten aus der Rating-Tabelle 1016 in den SIM-Karten empfangen. Zum Beispiel kann er von der SIM-Karte gesandte Billingsbelege, die Verbindungseinzelheiten aus der Tabelle 1016 enthalten, empfangen, entschlüsseln und die Signatur prüfen.

Im Fall einer Prepaid-Karte kann der Billing-Kollektor auf diese Weise die Gebührenerfassung nachkontrollieren und, wenn aufgefordert, den gespeicherten Geldbetrag nachladen. Im Fall einer Postpaid-Karte sammelt der Billing-Kollektor die für jede Verbindung erzeugten Billing-Belege, sortiert sie nach Finanzdienstleister und übermittelt sie den entsprechenden Finanzdienstleistern.

Die Billing-Belege können entweder nach jeder Verbindung an den Billing-Kollektor übertragen werden und als solche markiert werden oder vorzugsweise im Batch-Modus zum Beispiel jede Woche, jeden Monat oder nach einer bestimmten Anzahl Verbindungen übertragen und markiert werden. In einer Variante wird die ganze Rating-Tabelle 1016 zum Beispiel beim Einloggen der SIM-Karte im Netz, oder wenn der Restbetrag (im Fall einer Prepaidkarte) beziehungsweise die Limite (im Fall einer Postpaid-Karte) unter beziehungsweise über Null geht, übertragen.

Die Kommunikation zwischen den verschiedenen Servern 3 bis 7 und den SIM-Karten 10 erfolgt, wie schon erwähnt, durch das Telekommunikationsnetz 2, in diesem Beispiel ein GSM-Netz. Die im GSM-System etablierten Roamingmöglichkeiten erlauben dann die Benutzung des erfindungsgemässen Verrechnungsverfahrens in allen Netzen, die über ein Roamingabkommen mit dem Heimnetz des Benutzers verfügen. Dieses Verfahren kann dann, wie später erläutert, in allen durch Roamingabkommen verbundenen GSM900-, GSM1800-, PCS1900 und auch DCS1900-Einzelnetzen angewandt werden. Die Erfindung kann aber auch mit Nicht-GSM-Netzen angewandt werden.

Die Roaming-Verfahren sind zum Beispiel von 1. Brini et al. in "International roaming in digital cellular networks", CSELT Technical reports, Band XX, Nr. 6, Italien, Dezember 1992, S. 531-536, oder von denselben Autoren in "European roaming related technical problems" CSELT Technical reports, Band XX, Nr. 3, Italien, Juni 1992, S. 209-215, beschrieben.

Die Verbindungszeit und -dauer wird, wie schon erwähnt, von der Zeitmessvorrichtung 100 in dem vom Netzbetreiber zu Verfügung gestellten Identifizierungselement 10 gemessen. Diese Zeitmessvorrichtung kann nur aus der Infrastruktur, insbesondere aus dem Zeitserver 5, eingestellt werden. Die Einstellung erfolgt mit signierten Zeiteinstellungsbelegen, die die Zeit enthalten und vorzugsweise im Nutzkanal oder als USSD-Daten in der Signalisierungsschicht übertragen werden. Da die Signatur nur vom Zeitserver angefügt werden kann, ist die Sendung eines gefälschten Zeiteinstellungsbeleges ausgeschlossen.

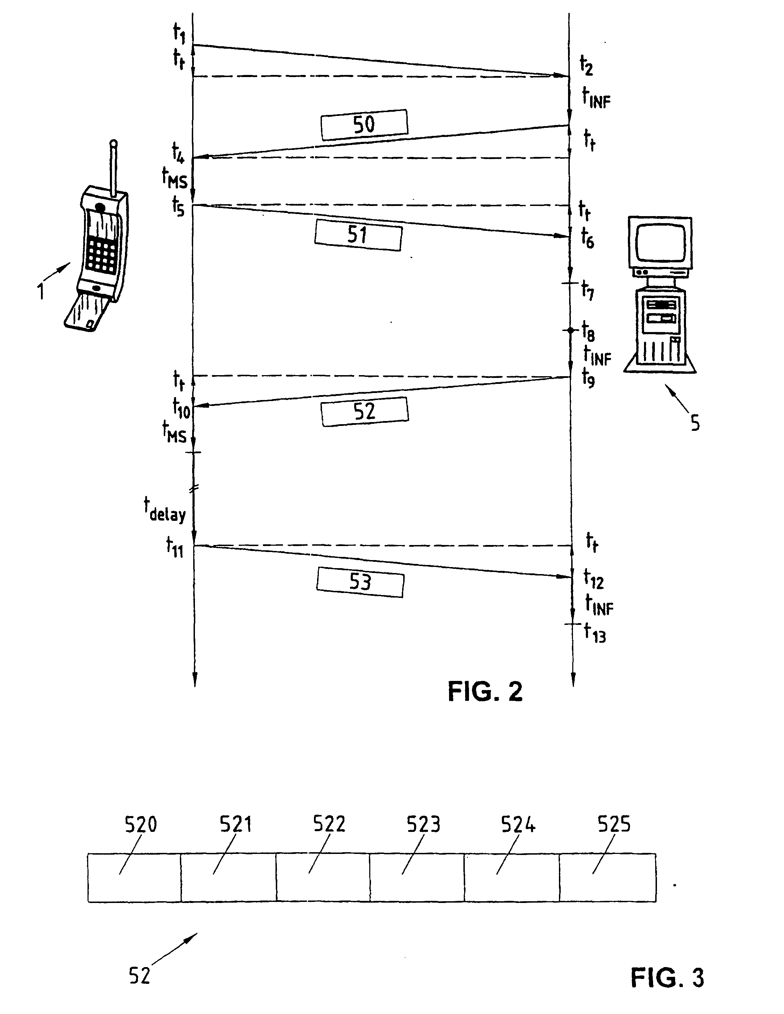

Der Gang der Zeitrnessvorrichtung wird von einem im Mobilgerät 1 integrierten Quarzelement bestimmt; der Kunde und auf jeden Fall der Mobilgerätehersteller können auf dieses Element zugreifen und es zum Beispiel durch ein schnelleres ersetzen, um eine kürzere Verbindungsdauer messen zu können. Um eine optimale Sicherheit zu gewährleisten, muss daher die eingestellte Zeit vom Zeitserver 5 nachgeprüft werden können, und, falls nötig, eingestellt werden. Wir werden jetzt mit Hilfe der Figur 2 ein mögliches Zeitprüfungsverfahren näher beschreiben. Die Zeitprüfung erfolgt vorzugsweise bei jedem Einloggen der SIM-Karte 10 im Netz 2 ; andere Prüfungsalgorithmen, zum Beispiel eine Zeitprüfung nach vordefinierten Zeitintervallen, zum Beispiel jeden Tag, oder nur im Zweifelsfall, kann jedoch bevorzugt werden.

Das Mobilgerät 1 mit der erfindungsgemässen Identifizierungskarte 10 meldet sich zur Zeit t1 im Netz 2 an (Einloggen). Der Zeitserver wird zur Zeit t2, nach einer Übertragungszeit $t_t$, von dieser Anmeldung informiert. Die Übertragungszeit $t_t$ hängt unter anderem vom Standort des Benutzers im Netz 2 ab ; für einen bestimmten Standort und zu einer bestimmten Tageszeit ist sie annähernd konstant.

In dieser Variante prüft der Zeitserver 5 die Genauigkeit der eingebauten Zeitmessvorrichtung 100 nach jedem Einloggen einer SIM-Karte. In einer ersten Phase (t1 bis t7) wird zuerst die Übertragungszeit tt gemessen ; in einer zweiten Phase (t8 bis t13) werden die Zeit und der Gang der Zeitmessvorrichtung geprüft und, falls nötig, eingestellt.

Um die Übertragungszeit $t_t$ zu messen schickt der Zeitserver 5 zur Zeit t3 einen $t_t$-Kontrollbeleg 50 an die gerade angemeldete SIM-Karte 10 mit der Aufforderung, auf diesen Beleg sofort zu antworten. Dieser Beleg 50 wird zur Zeit t4, nach einer Übertragungszeit $t_t$, von der Karte 10 empfangen. Nach einer bekannten Mobilgerät-Elearbeitungszeit $t_{MS}$ antwortet dann die SIM-Karte 10 zur Zeit t5 mit einem Antwortbeleg 51, der nach einer Übertragungszeit $t_t$ zur Zeit t6 vom Zeitserver 5 empfangen wird.

Der Zeitserver 5 kann dann die Übertragungszeit $t_t$ bestimmen :

$$t_t = \frac{(t6 - t3) - t_{MS}}{2}$$

Damit der Zeitserver nicht alle Berechnungen in Echtzeit durchführen muss, werden die empfangenen Antwortbelege 51 von den SIM-Karten 10 vorzugsweise zuerst mit einem Eingangsstempel ergänzt und in einem nicht dargestellten Stack zwischengespeichert. Auf diese Weise braucht der Zeitserver 5 nur die relativ einfache Stempeloperation in Echtzeit zu realisieren ; alle nachfolgenden Berechnungen können später, je nach Belastung des Servers 5, durchgeführt werden. Der Eingangsstempel gibt die Empfangszeit t6 an ; die Übertragungszeit $t_t$ wird erst zur Zeit t7 berechnet.

Nach der Bestimmung von $t_t$ bereitet der Zeitserver 5 zur Zeit t8 einen Zeitkontrollbeleg 52 auf, der nach einer Bearbeitungszeit $t_{INF}$ zur Zeit t9 an die SIM-Karte 10 geschickt wird. Die Figur 3 zeigt als Beispiel die typische Struktur eines Zeitkontrollbelegs. Der Beleg 52 enthält einen ersten Header 520, zum Beispiel einen Header im USSD-Format mit der Adresse des Empfängers im Netz. Ein zweiter Header 521 gibt an, dass diese Meldung eine spezielle Meldung ist, die von den benannten Filtermitteln 1010, 1011 vorzugsweise gemass dem SICAP-Verfahren bearbeitet werden muss. Ein dritter Header 522 gibt an, dass die Meldung ein Zeitbeleg ist. Das vierte Feld 523 enthält eine Zeitangabe, zum Beispiel die Sendezeit der Meldung t8. Das Feld 524 enthält den Befehl, an die SIM-Karte 10 eine Antwort nach einer in diesem Feld angegebenen Zeitdauer $t_{DELAY}$ nach der Zeitangabe 523 zurückzuschicken. Die angegebene Zeitdauer $t_{DELAY}$ wird vom Server nach einem pseudozufälligen Algorithmus bestimmt, so dass verschiedene Zeitkontrollbelege andere Werte für $t_{DELAY}$ enthalten. Das letzte Feld 525 enthält eine Signatur, vorzugsweise nach dem TTP-Protokoll, damit die SIM-Karte 10 zuverlässig prüfen kann, ob der empfangene Beleg wirklich vom Zeitserver und nicht von einem Fälscher erzeugt worden ist.

Der Zeitkontrollbeleg 52 wird durch das Netz 2 übertragen und zur Zeit t10, nach einer Übertragungszeit tt, vom Mobilgerät 1 empfangen. Nach einer Bearbeitungszeit $t_{MS}$ haben die Datenverarbeitungsmittel in der SIM-Karte 10 den empfangenen Beleg analysiert und bearbeitet. Nach einer zusätzlichen Zeit $t_{DELAY}$, oder in einer Variante $t_{DELAY}$ nach der angegebenen Zeit im Feld 523, schickt die SIM-Karte 10, wie aufgefordert, einen Antwortbeleg 53 an den Zeitserver 5 zurück. Dieser Antwortbeleg wird zur Zeit t11 geschickt und zur Zeit t12, nach einer Übertragungszeit $t_t$, vom Zeitserver 5 empfangen. Vorzugsweise wird diese Antwort sofort beim Eintreten mit einem Empfangszeitstempel versehen und temporär in einem Stack zwischengespeichert, um erst später vom Zeitserver 5 bearbeitet zu werden.

Der Zeitserver 5 prüft dann, ob die Antwort der SIM-Karte 10 zum richtigen Zeitpunkt t11 = t12-$t_t$ gesandt worden ist. Wenn t11 sich innerhalb einem vordefinierten Toleranzzeitbereich befindet, dann läuft die Zeitmessvorrichtung 100 richtig. Der Benutzer wird in diesem Fall im Netz 2 registriert und darf sein Mobilendgerät benutzen, wenn andere Voraussetzungen, wie z. B. Nichtsperrung der Karte, auch erfüllt sind.

Wenn t11 dagegen sich nicht innerhalb des vordefinierten Toleranzbereiches befindet, erfolgt ein optionaler zweiter Check, mit einem neuen Zeitkontrollbeleg. Wenn dieser zweite Test auch nicht erfolgreich ist, muss die Zeitmessvorrichtung 100 wieder eingestellt werden. In diesem Fall sendet der Zeitserver einen (nicht dargestellten) Zeiteinstellungsbeleg an die SIM-Karte 10, mit dem die Zeit und/oder der Gang der Zeitmessvorrichtung 100 mittels dem Register 1015 eingestellt wird. In einer Variante wird statt der Zeitmessvorrichtung 100, 1015 das Rating-System 1014 angepasst. In einer anderen Variante wird stattdessen die Tariftabelle 1013 angepasst. Auf jeden Fall erfolgt die Übertragung des Zeiteinstellungsbelegs signiert und vorzugsweise chiffriert, zum Beispiel mit TTP- oder PTP-Funktionen, damit ein Fälscher keine gefälschten Belege senden kann, um die gestellte Zeit zu manipulieren.

Die verschiedenen Belege 50-53 werden vorzugsweise durch den SIM-Server 3 im Nutzkanal durch das Telekommunikationsnetz 2 übertragen, damit die Übertragungszeit möglichst klein gehalten wird. In einer bevorzugten Variante werden die Belege als USSD-Meldung durch die Signalisierungsschichten des Kommunikationsprotokolls übertragen. Wegen der unvorhersehbaren Übertragungszeit von SMS-Meldungen werden die Belege jedoch vorzugsweise nicht durch diesen Kanal übertragen.

Andere Mechanismen können auch vorgesehen werden, um die gestellte Zeit in der SIM-Karte 10 zu prüfen und gegebenenfalls zu korrigieren. Beispielsweise kann der Zeitserver 5 periodisch die gestellte Zeit überprüfen und, falls nötig, einen Zeiteiristellungsbeleg erzeugen. Da, wie später erklärt, die SIM-Karte 10 Billing-Belege und/oder CDR (Call Detail Record) sendet, die immer eine Zeitangabe umfassen, kann in einer Variante die in Billing-Belegen ermittelte Zeit überprüft werden, damit die Zeitmessvorrichtung 100 nachgestellt werden kann, falls eine Zeitabweichung statistisch festgestellt wird.

Wichtig für eine internationale Benutzbarkeit ist, dass die Zeitmessvorrichtung 100 ständig mit der Zeit in der aktuellen Zeitzone gestellt wird. In einer Variante sendet der Zeitserver 5 bei jedem neuen Einloggen des Mobilgeräts 1 in einer neuen Zeitzone einen Zeiteinstellungsbeleg an die SIM-Karte 10. In einer anderen Variante bestimmt das Mobilgerät nach jedem Einloggen seinen aktuellen geographischen Standort und macht selber die Zeitzonenkorrektur mithilfe einer in der Karte gespeicherten Zeitzonentabelle.

Parallel zu diesem Verfahren wird beim Einloggen des Mobilgeräts auch überprüft, ob die gespeicherte Tariftabelle 1013 aktuell und vollständig ist. Zu diesem Zweck wird beim Einloggen im Heimnetz 2 oder in einem besuchten Netz ein Beleg an den Tarifserver 6 im Heimnetz übermittelt, in dem die aktuelle Tariftabellenversion gespeichert ist. Wenn diese Tariftabelle in der SIM-Karte 10 nicht mehr aktuell ist oder wenn sie ergänzt werden muss, wird ein Tarifbeleg vom Tarifserver 6 erzeugt, durch den TTP-Server 7 TTP-verschlüsselt und signiert, und durch den SIM-Server 3 und das Kommunikationsnetz 2 an die SIM-Karte 10 übermittelt. Die SIM-Karte 10 überprüft dann die Signatur des empfangenen Tarifbelegs und die gespeicherte Tariftabelle wird ergänzt oder angepasst wenn diese Signatur korrekt ist.

Dieses Tarifübermittlungsverfahren kann auch jedesmal eingesetzt werden, wenn der Netzbetreiber eine Tarifanpassung vornimmt und seine Tariftabellen im Tarifserver 6 ändert. In diesem Fall kann der Tarifserver automatisch die neuen Tarife an alle seine Abonnenten senden (Initialisieren und Aktualisieren der Tariftabellen).

Da die Speicherkapazität der SIM-Karte 10 nicht unbegrenzt ist, wird vorzugsweise kein kompletter Tariffsatz sondern nur die Tarife für Telekommunikationsnetzbereiche gespeichert, in denen der Benutzer statistisch oft telefoniert und optional für einige vordefinierte Telekommunikationsnetzbereiche. Beispielsweise werden in einer neuen Identifizierungskarte nur die Tarife für Verbindungen innerhalb seines Heimnetzes, oder nur Tarife für Verbindungen zwischen dem Heimnetz und einigen Nachbarnetzen gespeichert. Wenn der Benutzer sich dann mit seinem Mobilgerät in einem anderen Netz einloggt, werden gemäss dem oben beschriebenen Mechanismus Tariftabellen für Verbindungen aus und in dieses neue Netz zusätzlich in seiner Identifizierungskarte 10 zusätzlich gespeichert. Die Tariftabellen können auch komprimiert werden, um Speicherplatz zu sparen.

Benutzerabhängige Discountparameter können mit den gespeicherten Tariftabellen verknüpft werden, damit der Benutzer individuell nach seinem Benutzungsverhalten von entsprechenden Discounts profitieren kann. Discounts können beliebig nach verschiedenen Kriterien eingesetzt werden. Zum Beispiel kann ein Netzbetreiber Discountparameter in SIM-Karten von Arbeitnehmern in Grossunternehmen programmieren oder auch später nachladen. Spezielle Ermässigungen, wie zum Beispiel eine freie Nummer oder Listen von freien Nummern können auch in den Tariftabellen 1013 und/oder als Teil des Rating-Systems 1014 programmiert werden. Andere Discountmöglichkeiten oder zum Beispiel zeitlich limitierte Angebote können mit speziellen Meldungen in die SIM-Karte übertragen und programmiert werden. Die Benutzer haben auch die Möglichkeit, einen neuen Abonnementstyp anzufordern oder zusätzliche Discountmöglichkeiten zu kaufen. Die entsprechenden Tariftabellen und Rating-Komponenten als Bestandteil von der Tariftabellen 1013 und/oder des Rating-Systems 1014 werden dann vom Operator ferngeladen.

Vorzugsweise wird in den Verbindungseinzelheiten 10161 auch die Tariftabellenversion gespeichert, die zur statistischen Nachkontrolle genutzt werden kann. Für den Fall, dass später festgestellt wird, dass die für eine Verrechnung benutzte Version nicht stimmt, wird die aktuelle Tariftabelle gemäss dem oben beschriebenen Mechanismus an die SIM-Karte 10 übermittelt und eine Korrektur durchgeführt.

Wir werden jetzt beschreiben, wie die Verrechnung bei einer Verbindung erfolgt.

Bei einem Verbindungsaufbau wird die Anrufnummer durch ein geeignetes Programm im gesicherten Bereich der Identifizierungskarte 10 analysiert. Befinden sich die für den Zielbereich nötigen Tarifwerte in der Tariftabelle 1013 auf der Karte 10, und ist die Karte nicht gesperrt, wird der Verbindungsaufbau effektiv vollzogen. Wenn die benötigten Tarifelemente auf der Karte nicht verfügbar sind, wird der Verbindungsaufbau vorzugsweise gesperrt und ein Updating-Beleg an den Tarifserver 6 gesandt, um diese Daten zu laden.

Die zur Auswertung der zu verrechnenden Gebühr benötigten Parameter werden nach Signalisierung des Verbindungsaufbaus gesammelt. Die Verbindungsgebühr ist beispielsweise unter anderem von der Verbindungsdauer, von der Tageszeit, vom Wochentag, vom Standort des anrufenden Benutzers (A) und des angerufenen Benutzers (B), von den Tariftabellen und gegebenenfalls von möglichen benutzerspezifischen Discounts abhängig. Alle diese Parameter sind entweder in der Identifizierungskarte vorhanden oder werden mit der eingebauten Zeitmessvorrichtung 100 ermittelt. Die Auswertung der Verbindungsgebühr kann daher während und nach der Verbindung in Abhängigkeit der mit der Zeitmessvorrichtung ermittelten Verbindungsdauer und -zeit vom Rating-System 1014 durchgeführt werden. Der ermittelte Betrag wird dann vorzugsweise auf der Anzeige des Mobilgeräts 1 angezeigt und mit anderen, für die Verrechnung relevanten Informationen, in einer neuen Zeile im Feld 10161 der Ratingstabelle 1016 gespeichert. Im Fall einer Prepaid-Karte wird diese Gebühr dann vom Betrag 10162 in der vorhergehenden Zeile subtrahiert. Der neue Restbetrag 10162 kann dann auf der Anzeige des Mobilgeräts 1 angezeigt und auf der neuen Zeile in der Kolonne 10162 gespeichert werden. Ist dieser Restbetrag kleiner als ein vordefinierter Wert, zum Beispiel kleiner oder gleich Null, wird die SIM-Karte 10 vorzugsweise gesperrt. Sie kann nur wieder benutzt werden, wenn sie mit einem neuen Geldbetrag nachgeladen wird.

Im Fall einer Postpaid-Karte, wird die ermittelte Gebühr dagegen mit dem Totalbetrag aus der vorhergehenden Zeile in der Tabelle 1016 addiert und das neue Total in der entsprechenden Zeile gespeichert. Ist dieser Betrag grösser als die vom Netzbetreiber oder vom Kunden gesetzte Limite, wird die Karte vorzugsweise gesperrt. In diesem Fall kann sie nur dann entsperrt werden, wenn zum Beispiel der Kunde seine Telefonrechnung bezahlt hat.

Wie schon erwähnt, können die Gebührendaten 10161 in der Tabelle 1016 in einem Billing-Beleg verpackt, mit einer TTP-Signatur versehen und durch das Telekommunikationsnetz 2 dem Billing-Collector 4 übertragen werden. In einer Prepaid-Karte erfolgt diese Übertragung nur zu Kontroll- oder Statistik-Zwecken, zum Beispiel periodisch oder bei jedem Einloggen der SIM-Karte. In einer Postpaid-Karte erfolgt diese Übertragung vorzugsweise auf Initiative der SIM-Karte zum Beispiel nach jeder Verbindung oder im Batch-Modus beim Einloggen oder zum Beispiel nach einer vordefinierten Zeitperiode oder Anzahl von Verbindungen. Die übertragenen Verrechnungseinzelheiten werden in der Kolonne 10160 markiert angegeben. Die Billingsbelege werden im Billing-Collector 4 nach Finanzdienstleister sortiert und den entsprechenden Finanzdienstleistern übermittelt. Dieser Finanzdienstleister stellt dem Benutzer dann eine Rechnung oder belastet sein Konto. Als Finanzdienstleister kommt zum Beispiel der Netzbetreiber selbst in Frage, oder auch eine Bank, ein Kreditkartenunternehmen oder andere Inkassostellen. Da die Billingsbelege bereits einen Rechnungsteil repräsentieren, braucht der Netzbetreiber kein eigentliches Billing-System mehr zu verwalten.

Da alle Elemente für einen Gebührenauszug im Billing-Beleg vorhanden sind, können sie dem Kunden zum Beispiel über Internet oder per Post bereitgestellt werden. Billingsbelege sind, wie schon erwähnt, TTP-verschlüsselt und -signiert, daher ist gesichert, dass nur der berechtigte Kunde auf seinen Gebührenauszug zugreifen kann.

Der Fachmann wird feststellen, das Pre- und Postpaid-Verrechnungsverfahren gemäss der Erfindung parallel im gleichen Telekommunikationssystem eingesetzt werden können.

Parallel zu den auf den SIM-Karten erzeugten Billing-Belegen werden vorzugsweise in der Infrastruktur des GSM-Netzes konventionelle CDR (Call Detail Record) erzeugt, die zur Kontrolle der Billing-Belege und für weitere Statistiken genutzt werden.

Dieses Verfahren kann nicht nur eingesetzt werden, um Telefonverbindungen des Benutzers der SIM-Karte zu verrechnen sondern auch um die Benutzung von anderen Ressourcen auf der Karte 10 zu verrechnen. Grundsätzlich können mit diesem Verfahren alle Operationen, für die alle Verrechnungsparameter auf der SIM-Karte 10 zu Verfügung stehen, verrechnet werden. Beispielsweise kann auch die Benutzung von im Speicherbereich der Karte gespeicherten Programmen oder von einer induktiven oder infraroten Schnittstelle verrechnet werden, zum Beispiel in Abhängigkeit der Dauer der Benutzung. Mehrwertdienste oder Zugriffe auf das Internet können ebenfalls mit diesem Verfahren verrechnet werden. Waren können zum Beispiel auch durch das Mobilfunknetz 2 bestellt werden und mit dem erfindungsgemässen Rating-System 1014 verrechnet werden. In diesem Fall werden vorzugsweise Rechnungskomponenten, zum Beispiel der Preis der gekauften Ware, durch das Netz 2 an das Rating-System 1014 übertragen.

Dieses Verrechnungsverfahren kann in jedem Netz eingesetzt werden, das mit dem Heimnetz des Benutzers durch ein Roamingabkommen verbunden ist. Der Anwendungsbereich ist daher nicht auf ein Heim-GSM-Netz beschränkt; der Einsatz ist global unabhängig von der Netzstruktur in allen Telekommunikationsnetzen möglich und kann auch mit anderen Kommunikationssystemen als mit dem GSM-System verwendet werden.

Dieses Verrechnungsverfahren kann bei mehreren Netzbetreibem eingesetzt werden. In diesem Fall verfügt jeder Netzbetreiber vorzugsweise über seinen eigenen Tarifserver 6. Die verschiedenen Tarifserver sind jedoch vorzugsweise miteinander verbunden, so dass Tarifanpassungen international nur einmal durchgeführt werden müssen. In einer Variante sind alle Tariftabellen in einem Master-Tarifserver gespeichert, auf den alle Netzbetreiber-spezifischen Tarifserver zugreifen können, um ihre Tarife zu bestimmen. In einer weiteren Variante greifen alle Netzbetreiber auf denselben, von allen verwalteten Tarifserver 6 zu. Die Verwaltung der netzspezifischen Tarife im Tarifserver kann von den einzelnen Netzbetreibem über einen kryptographisch gesicherten Prozess vollzogen werden. Vorzugsweise benutzen alle Tarifserver eine einheitliche Währung, zum Beispiel SDR, Euro oder Dollars.

Der Fachmann wird feststellen, dass der Netzbetreiber die vollständige Identität des Kunden im Fall einer Prepaid-Karte nicht zu kennen braucht In diesem Fall kann daher eine vollständige Anonymität der Benutzer gewährleistet werden.

Der Fachmann wird feststellen, dass diese Erfindung auch für die Verrechnung von Operationen in fast jedem Typ von Telekommunikationsnetz angewandt werden kann, zum Beispiel in einem Pay-TV-Netz oder im Internet. In diesem letzten Fall werden die verschiedenen, erwähnten Meldungen z.B. als e-mail übertragen.

**Patentansprüche**

1. Identifizierungskarte (10) für Benutzer eines Kommunikationsendgeräts (1) in einem Telekommunikationsnetz (2), die in wegnehmbarer Weise in das Kommunikationsendgerät (1) einführbar ist, enthaltend:

   Datenverarbeitungsmittel (101), welche das Speichern von Daten ermöglichen, die mindestens Identifikationsdaten des Benutzers enthalten,

   eine integrierte Zeitmessvorrichtung (100), mit der die Dauer und die Zeit der mit dieser Karte durchgeführten Verbindungen im Telekommunikationsnetz (2) gemessen wird, und

   Rating-Mittel (1014), mit denen die Verbindungsgebühren in Abhängigkeit von der mit der integrierten Zeitmessvorrichtung (100) gemessenen Dauer und Zeit ermittelt werden,

   **dadurch gekennzeichnet**, dass sie ausserdem enthält:

   mindestens ein integriertes Einstellungsregister (1015), mit dem die Zeitmessvorrichtung (100) einstellbar ist, und

   eine Schnittstelle (12) für ein externes Taktsignal (f+, f-), mit dem die integrierte Zeitmessvorrichtung (100) synchronisierbar ist.

2. Identifizierungskarte gemäss dem vorhergehenden Anspruch, **dadurch gekennzeichnet**, dass das benannte Einstellungsregister (1015) mit speziellen Meldungen, die durch das benannte Telekommunikationsnetz (2) übertragen werden, angepasst werden kann.

3. Identifizierungskarte (10) gemäss einem der vorhergehenden Ansprüche, **dadurch gekennzeichnet**, dass das benannte Einstellungsregister (1015) in einem gesicherten, dem Benutzer nicht zugänglichen Bereich der Identifizierungskarte (10) gespeichert ist.

4. Identifizierungskarte (10) gemäss dem vorhergehenden Anspruch, **dadurch gekennzeichnet**, dass das benannte Einstellungsregister (1015) nur mit signierten Einstellungsbelegen von einem Zeitserver (5) im Telekommunikationsnetz (2) geändert werden kann.

5. Identifizierungskarte (10) gemäss einem der vorhergehenden Ansprüche, **dadurch gekennzeichnet**, dass sie mindestens eine gespeicherte Tariftabelle (1013) umfasst, und dass das Rating System (1016) die Verbindungsgebühren in Abhängigkeit von dieser Tariftabelle ermittelt.

6. Identifizierungskarte (10) gemäss dem vorhergehenden Anspruch, **dadurch gekennzeichnet**, dass sie so eingerichtet ist, dass sie die durch das Kommunikationsnetz (2) in speziellen Kurzmeldungen empfangenen Tariftabellen erkennen und kopieren kann.

7. Identifizierungskarte gemäss einem der Ansprüche 5 bis 6, **dadurch gekennzeichnet**, dass sie ausserdem Entschlüsselungsmittel (1012) enthält, um empfangene verschlüsselte Tariftabellenkomponenten zu entschlüsseln.

8. Identifizierungskarte gemäss einem der Ansprüche 6 bis 7, **dadurch gekennzeichnet**, dass sie ausserdem Signaturprüfmittel (1012) enthält, um zu prüfen, ob die empfangenen Tariftabellen von einem autorisierten Tarif-Server (6) zugestellt worden sind.

9. Identifizierungskarte gemäss einem der vorhergehenden Ansprüche, **dadurch gekennzeichnet**, dass sie ein Prepaid-Konto (10162) enthält, auf dem die verrechneten Verbindungsgebühren direkt abgebucht werden.

10. Identifizierungskarte gemäss einem der vorhergehenden Ansprüche, **dadurch gekennzeichnet**, dass sie Mittel enthält, um andere Operationen als Verbindungen mit dem benannten Rating-System (1014) und der benannten Zeitmessvorrichtung (100) dem Benutzer zu verrechnen.

11. Identifizierungskarte (10) gemäss einem der vorhergehenden Ansprüche, **dadurch gekennzeichnet**, dass sie ausserdem einen unabhängigen Energiespeicher (102) enthält, der mindestens die Zeitmessvorrichtung (100) speist

12. Identifizierungskarte (10) gemäss einem der vorhergehenden Ansprüche, **dadurch gekennzeichnet**, dass sie ausserdem eine Rating-Tabelle (1016) enthält, in der Verbindungseinzelheiten (10161) von mindestens einer bereits durchgeführten Verbindung oder Operation gespeichert werden.

13. Identifizierungskarte gemäss dem vorhergehenden Anspruch, **dadurch gekennzeichnet**, dass sie Mittel enthält, um die benannten Verbindungseinzelheiten (10161) in Billing-Belege zu verpacken und einem Billing-Kollektor (4) in dem genannten Telekommunikationsnetz (2) zuzustellen.

14. Identifizierungskarte gemäss dem vorhergehenden Anspruch, **dadurch gekennzeichnet**, dass sie Signierungsmittel (1012) enthält, um die benannten Billing-Belege zu signieren, bevor sie dem Billing-Kollektor (4) zugestellt werden.

15. Identifizierungskarte gemäss einem der Ansprüche 13 oder 14, **dadurch gekennzeichnet**, dass sie so eingerichtet ist, dass sie die benannten Billing-Belege im Batch-Modus an den Billing-Kollektor (4) zustellen kann.

16. Identifizierungskarte gemäss einem der Ansprüche 13 oder 14, **dadurch gekennzeichnet**, dass sie so eingerichtet ist, dass sie die benannten Billing-Belege gleich nach jeder Verbindung an den Billing-Kollektor (4) zustellen kann.

17. Identifizierungskarte gemäss einem der Ansprüche 13 oder 14. **dadurch gekennzeichnet**, dass sie so eingerichtet ist, dass sie die benannten Billing-Belege beim Einloggen an den Billing-Kollektor (4) zustellen kann.

18. Identifizierungskarte gemäss einem der vorhergehenden Ansprüche, **dadurch gekennzeichnet**, dass die Frequenz des externen Taktsignals (f+, f-) mit der integrierten Zeitmessvorrichtung ermittelbar ist,

und dass der Teilungsfaktor der Zeitmessvorrichtung in Abhängigkeit von dieser ermittelten Frequenz anpassbar ist.

19. Identifizierungskarte gemäss dem vorhergehenden Anspruch, **dadurch gekennzeichnet**, dass sie so eingerichtet ist, dass sie die ermittelte Information über die Frequenz des Taktsignals im Speicherbereich der Identifizierungskarte speichern kann.

20. Verrechnungsverfahren, um die Benutzung von mindestens einer Operation mit einer in wegnehmbarer Weise in ein Kommunikationsendgerät (1) eingeführten Identifizierungskarte (10) in einem Telekommunikationsnetz (2) dem Benutzer zu verrechnen, welche Identifizierungskarte (10) eine integrierte Zeitmessvorrichtung (100) umfasst und auf welcher Identifizierungskarte (10) Daten gespeichert werden, die mindestens Identifikationsdaten des Benutzers enthalten, gekennzeichnet durch:

Einstellung der Zeitmessvorrichtung (100) mittels eines integrierten Einstellungsregisters (1015) der Identifizierungskarte (10),

Synchronisierung der Zeitmessvorrichtung (100) mit einem externen, ausserhalb der Identifizierungskarte (10) erzeugten Taktsignal (f+, f-) über eine Schnittstelle (12) der Identifizierungskarte (10),

Messung der Dauer und der Zeit der mit dieser Identifizierungskarte (10) durchgeführten Verbindungen im Telekommunikationsnetz (2), und

Ermittlung der Verbindungsgebühren in Abhängigkeit von der mit der integrierten Zeitmessvorrichtung (100) gemessenen Dauer und Zeit durch Rating-Mittel (1014) der Identifizierungskarte (10).

21. Verrechnungsverfahren gemäss dem vorhergehenden Anspruch, **dadurch gekennzeichnet**, dass die Verbindungsgebühren in Abhängigkeit von in der Identifizierungskarte gespeicherten Tariftabellen (1013) ermittelt werden.

22. Verrechnungsverfahren gemäss dem vorhergehenden Anspruch, **dadurch gekennzeichnet**, dass die benannten Tariftabellen (1013) in einem Tarif-Server (6) gespeichert sind und über ein genanntes Telekommunikationsnetz (2) in die Identifizierungskarte (10) kopiert werden können.

23. Verrechnungsverfahren gemäss einem der Ansprüche 20 bis 22, **dadurch gekennzeichnet**, dass der Tarif-Server (6) nach Einloggen einer Identifizierungskarte (10) in einem Telekommunikationsnetz (2) die Version der in dieser Identifizierungskarte (10) gespeicherten Tariftabelle (1013) überprüft, und, falls nötig, die aktuellste Version auf diese Identifizierungskarte überträgt.

24. Verrechnungsverfahren gemäss einem der Ansprüche 20 bis 23, **dadurch gekennzeichnet** dass ein Zeitkontroller (5) Zeitkontrollbelege an die Identifizierungskarte senden kann, um die eingestellte Zeit zu überprüfen, und, falls die Zeit nicht korrekt gestellt ist, einen Zeiteinstellungsbeleg an diese Identifizierungskarte übermittelt.

25. Verrechnungsverfahren gemäss dem vorhergehenden Anspruch, **dadurch gekennzeichnet**, dass die übermittelten Zeiteinstellungsbelege vom Zeitserver (5) elektronisch signiert werden.

26. Verrechnungsverfahren gemäss einem der Ansprüche 20 bis 25, **dadurch gekennzeichnet**, dass die ermittelten Verbindungsgebühren direkt aus einem Prepaid-Konto (10162) in der Identifizierungskarte (10) abgebucht werden.

27. Verrechnungsverfahren gemäss einem der Ansprüche 20 bis 26, **dadurch gekennzeichnet**, dass die für die Ermittlung der Verbindungsgebühren benötigten Verbindungseinzelheiten in Billingsbelege verpackt und an einen Billing-Kollektor (4) zugestellt werden.

28. Verrechnungsverfahren gemäss dem vorhergehenden Anspruch, **dadurch gekennzeichnet**, dass die Billingsbelege von der Identifizierungskarte (10) elektronisch signiert werden.

29. Verrechnungsverfahren gemäss dem vorhergehenden Anspruch, **dadurch gekennzeichnet**, dass die an den Billing-Kollektor (4) übermittelten Billingsbelege sortiert und an einen entsprechenden Finanzdienstleister übertragen werden.

30. Verrechnungsverfahren gemäss einem der Ansprüche 20 bis 29, **dadurch gekennzeichnet**, dass auch die Benutzung von nicht für die Verkehrsabwicklung zuständigen Ressourcen in der Identifizierungskarte (10) mit der benannten Zeitmessvorrichtung (100) verrechnet wird.

## Claims

1. Identification card (10) for users of a communication terminal (1) in a telecommunications network (2), which card can be inserted into the communication terminal (1) in a removable way, containing:

    data processing means (101) which make possible the storage of data including at least identification data of the user,
    an integrated time-measuring device (100), with which the duration and the time of the connections in the telecommunications network (2) carried out with this card are measured,
    rating means (1014), with which the connection fees are determined based upon the duration of use and time established with the integrated time-measuring device (100),

    **characterised in that** it further comprises:

    at least one integrated adjustment register (1015) with which the time-measuring device (100) is adjustable, and
    an interface (12) for an external clock signal (f+, f-) with which the integrated time-measuring device (100) is able to be synchronised.

2. Identification card according to the preceding claim, **characterised in that** the said adjustment register (1015) can be adapted with special messages transmitted through the said telecommunications network (2).

3. Identification card (10) according to one of the preceding claims, **characterised in that** the said adjustment register (1015) is stored in a protected area of the identification card (10) not accessible to the user.

4. Identification card (10) according to the preceding claim, **characterised in that** the said adjustment register (1015) can only be changed with signed adjustment records from a time server (5) in the telecommunications network (2).

5. Identification card (10) according to one of the preceding claims, **characterised in that** it comprises at least one stored tariff table (1013), and in that the rating system (1016) determines the connection fees based upon this tariff table.

6. Identification card (10) according to the preceding claim, **characterised in that** it is set up such that it can recognise and copy the tariff tables received in special short messages through the communications network (2).

7. Identification card according to one of the claims 5 to 6, **characterised in that** it further comprises decryption means (1012) to decrypt received encrypted tariff table components.

8. Identification card according to one of the claims 6 to 7, **characterised in that** it further comprises signature checking means (1012) to check whether the received tariff tables have been transmitted by an authorised tariff server (6).

9. Identification card according to one of the preceding claims, **characterised in that** it contains a prepaid account (10162) against which the charged connection fees are directly debited.

10. Identification card according to one of the preceding claims, **characterised in that** it contains means to charge to the user operations other than connections using said rating system (1014) and said time-measuring device (100).

11. Identification card (10) according to one of the preceding claims, **characterised in that** it further contains an independent energy storage device (102), which feeds at least the time-measuring device (100).

12. Identification card (10) according to one of the preceding claims, **characterised in that** it further contains a rating table (1016) in which connection details (10161) on at least one already carried-out connection or operation are stored.

13. Identification card according to the preceding claim, **characterised in that** it contains means to pack said connection details (10161) in billing records and to transmit them to a billing collector (4) in said telecommunications network (2).

14. Identification card according to the preceding claim, **characterised in that** it contains signing means (1012) to sign said billing records before they are transmitted to the billing collector (4).

15. Identification card according to one of the claims 13 or 14, **characterised in that** it is set up such that it can transmit said billing records in batch mode to the billing collector (4).

16. Identification card according to one of the claims 13 or 14, **characterised in that** it is set up such that it can transmit said billing records to the billing collector (4) immediately after each connection.

17. Identification card according to one of the claims 13 or 14, **characterised in that** it is set up such that it can transmit said billing records to the billing collector (4) when logging in.

18. Identification card according to one of the preceding claims, **characterised in that** the frequency of the external clock signal (f+, f-) can be determined with the integrated time-measuring device,

and in that the division factor of the time-measuring device can be adjusted based on this determined frequency.

19. Identification card according to the preceding claim, **characterised in that** it is set up such that it can store the determined information on the frequency of the clock signal in the memory area of the identification card.

20. Billing method for billing to the user the use of at least one operation with an identification card (10) inserted in removable way in a communication terminal (1) in a telecommunications network (2), which identification card (10) comprises an integrated time-measuring device (100) and on which identification card (10) data are stored including at least identification data of the user, characterised by:

adjustment of the time-measuring device (100) by means of an integrated adjustment register (1015) of the identification card (10), synchronisation of the time-measuring device (100) with an external clock signal (f+, f-) generated outside the identification card (10) via an interface (12) of the identification card (10), measurement of the duration and time of the connections in the telecommunications network (2) carried out with this identification card (10), and

determination of the connection fees by rating means (1014) of the identification card (10) based on the duration and time measured with the integrated time-measuring device (100).

21. Billing method according to the preceding claim, **characterised in that** the connection fees are determined based upon tariff tables (1013) stored in the identification card.

22. Billing method according to the preceding claim, **characterised in that** said tariff tables (1013) are stored in a tariff server (6) and can be copied into the identification card (10) through a said telecommunications network (2).

23. Billing method according to one of the claims 20 to 22, **characterised in that** after logging in of an identification card (10) in a telecommunications network (2) the tariff server (6) checks the version of the tariff tables (1013) stored in said identification card (10), and, if necessary, transmits the most recent version onto said identification card.

24. Billing method according to one of the claims 20 to 23, **characterised in that** a time controller (5) can transmit time check records to the identification card to check the time set, and, if the time is not set correctly, transmit a time setting record to this identification card.

25. Billing method according to the preceding claim, **characterised in that** the transmitted time setting records are electronically signed by the time server (5).

26. Billing method according to one of the claims 20 to 25, **characterised in that** the determined connection fees are debited directly against a prepaid account'(10162) in the identification card (10).

27. Billing method according to one of the claims 20 to 26, **characterised in that** the connection details necessary to determine the connection fees are packed in billing records and are transmitted to a billing collector (4).

28. Billing method according to the preceding claim, **characterised in that** the billing records are electronically signed by the identification card (10).

29. Billing method according to the preceding claim, **characterised in that** the billing records transmitted to the billing collector (4) are sorted and are transmitted to a corresponding financial services provider.

30. Billing method according to one of the claims 20 to 29, **characterised in that** the use of resources in the identification card (10) not responsible for carrying out communication is also billed using said time-measuring device (100).

## Revendications

1. Carte d'identification (10) destinée aux utilisateurs d'un terminal de communications (1) dans un réseau de télécommunications (2), pouvant être introduite de manière amovible dans le terminal de communications (1) et comportant des moyens de traitement de l'information (101) qui permettent la mise en mémoire de données contenant au moins des données d'identification de l'utilisateur, un dispositif intégré de mesure du temps (100), qui mesure la durée et l'heure des communications établies avec cette carte dans le réseau de télécommunications (2), et des moyens de tarification (1014) grâce auxquels on détermine les redevances correspondant aux communications en fonction de la durée et de l'heure mesurées par le dispositif intégré de mesure du temps (100), **caractérisée en ce qu'**elle comporte en outre au moins un registre de réglage (1015) permettant de régler le dispositif de mesure du temps (100) et une interface (12) destinée à un signal d'horloge extérieur (f+, f-) avec lequel le dispositif intégré de mesure du temps (100) peut être synchronisé.

2. Carte d'identification selon la revendication précédente, **caractérisée en ce que** le registre de réglage (1015) mentionné peut être adapté grâce à des messages particuliers qui sont transmis par le réseau de télécommunications (2) mentionné.

3. Carte d'identification (10) selon l'une des revendications précédentes, **caractérisée en ce que** le registre de réglage (1015) mentionné est en mémoire dans une partie protégée de la carte d'identification (10), qui n'est pas accessible à l'utilisateur.

4. Carte d'identification (10) selon la revendication précédente, **caractérisée en ce que** le registre de réglage (1015) ne peut être modifié, par un serveur d'heure (5) situé dans le réseau de télécommunications (2), qu'avec des documents de réglage signés.

5. Carte d'identification (10) selon l'une des revendications précédentes, **caractérisée en ce qu'**elle comprend au moins un tableau des tarifs (1013) mis en mémoire et que le système de trarification (1016) détermine les redevances pour communications en fonction de ce tableau des tarifs.

**6.** Carte d'identification (10) selon la revendication précédente, **caractérisée en ce qu'**elle est réalisée de telle manière qu'elle puisse reconnaître et copier les tableaux des tarifs reçus dans des messages courts particuliers par l'intermédiaire du réseau de communications (2).

**7.** Carte d'identification selon la revendication 5 ou 6, **caractérisée en ce qu'**elle comprend en outre des moyens de décryptage (1012) pour les éléments cryptés des tableaux des tarifs qu'elle reçoit.

**8.** Carte d'identification selon la revendication 6 ou 7, **caractérisée en ce qu'**elle comporte en outre des moyens de vérification des signatures (1012) servant à vérifier si les tableaux des tarifs qui sont reçus proviennent d'un serveur de tarifs autorisé (6).

**9.** Carte d'identification selon l'une des revendications précédentes, **caractérisée en ce qu'**elle comporte un compte prépayé (10162) auquel les redevances pour communications qui sont facturées sont imputées directement.

**10.** Carte d'identification selon l'une des revendications précédentes, **caractérisée en ce qu'**elle comporte des moyens servant à facturer à l'utilisateur d'autres opérations que des communications avec le système de tarification (1014) mentionné et avec le dispositif mentionné de mesure du temps (100).

**11.** Carte d'identification (10) selon l'une des revendications précédentes, **caractérisée en ce qu'**elle comporte en outre un accumulateur d'énergie indépendant (102) qui alimente au moins le dispositif de mesure du temps (100).

**12.** Carte d'identification (10) selon l'une des revendications précédentes, **caractérisée en ce qu'**elle comporte en outre un tableau des tarifs (1016) dans lequel sont mis en mémoire des détails de communications (10161) d'au moins une communication ou opération déjà effectuée.

**13.** Carte d'identification selon la revendication précédente, **caractérisée en ce qu'**elle comporte des moyens servant à comprimer les détails de communications (10161) mentionnés dans des justificatifs de facturation et à les faire parvenir à un collecteur de facturation (4), dans le réseau de télécommunications (2) précité.

**14.** Carte d'identification selon la revendication précédente, **caractérisée en ce qu'**elle comporte des moyens de signature (1012) permettant de signer les justificatifs de facturation mentionnés avant qu'ils soient communiqués au collecteur de facturation (4).

**15.** Carte d'identification selon la revendication 13 ou 14, **caractérisée en ce qu'**elle est réalisée de manière à pouvoir faire parvenir les justificatifs de facturation par lots au collecteur de facturation (4).

**16.** Carte d'identification selon la revendication 13 ou 14, **caractérisée en ce qu'**elle est réalisée de manière à pouvoir faire parvenir les justificatifs de facturation mentionnés au collecteur de facturation (4) immédiatement après chaque communication.

**17.** Carte d'identification selon la revendication 13 ou 14, **caractérisée en ce qu'**elle est réalisée de manière à pouvoir faire parvenir les justificatifs de facturation mentionnés au collecteur de facturation (4) lors de la procédure d'entrée.

**18.** Carte d'identification selon l'une des revendications précédentes, **caractérisée en ce que** la fréquence du signal d'horloge extérieur (f+, f-) peut être déterminée au moyen du dispositif intégré de mesure du temps, et en ce que le facteur de division du dispositif de mesure du temps est adaptable en fonction de cette fréquence, qui a été déterminée.

**19.** Carte d'identification selon la revendication précédente, **caractérisée en ce qu'**elle est réalisée de telle manière qu'elle puisse enregistrer, dans sa partie mémoire, les renseignements obtenus sur la fréquence du signal d'horloge.

**20.** Procédé de facturation servant à facturer à l'utilisateur l'utilisation d'au moins une opération effectuée dans un réseau de télécommunications (2) au moyen d'une carte d'identification (10) introduite de manière amovible dans un terminal de communications (1), cette carte d'identification (10) comportant un dispositif intégré de mesure du temps (100) et des données étant mises en mémoire sur elle, ces données comprenant au moins des données d'identification de l'utilisateur, **caractérisé en ce qu'**il comporte le réglage du dispositif de mesure du temps (100) au moyen d'un registre intégré de réglage (1015) de la carte d'identification (10), la synchronisation du dispositif de mesure du temps (100) par un signal d'horloge (f+, f-) extérieur, produit en dehors de la carte d'identification (10), par l'intermédiaire d'une interface (12) de cette carte d'identification (10), la mesure de la durée et de l'heure des communications établies dans le réseau de télécommunications (2) avec cette carte d'identification (10), et l'établissement des redevances de communications en fonction de la durée et de l'heure, mesurées par le dispositif intégré de mesure du temps (100), par des moyens de tarification (1014) de la carte d'identification (10).

**21.** Procédé de facturation selon la revendication précédente, **caractérisé en ce que** les redevances de communications sont déterminées en fonction de tableaux des tarifs (1013) enregistrés dans la carte d'identification.

22. Procédé de facturation selon la revendication précédente, **caractérisé en ce que** les tableaux des tarifs (1013) mentionnés sont en mémoire dans un serveur de tarifs (6) et peuvent être copiés dans la carte d'identification (10) par l'intermédiaire d'un réseau de télécommunications (2) indiqué.

23. Procédé de facturation selon l'une des revendications 20 à 22, **caractérisé en ce que**, après la procédure d'entrée d'une carte d'identification (10) dans un réseau de télécommunications (2), le serveur de tarifs (6) vérifie la version du tableau des tarifs (1013) enregistré dans cette carte d'identification (10) et, si nécessaire, en envoie la version la plus récente sur cette carte d'identification.

24. Procédé de facturation selon l'une des revendications 20 à 23, **caractérisé en ce qu'**un contrôleur d'heure (5) peut envoyer des justificatifs de contrôle de l'heure à la carte d'identification afin de vérifier l'heure réglée et, dans le cas où l'heure n'est pas réglée correctement, envoie à cette carte d'identification un justificatif de réglage de l'heure.

25. Procédé de facturation selon la revendication précédente, **caractérisé en ce que** les justificatifs de réglage de l'heure envoyés sont signés électroniquement par le serveur d'heure (5).

26. Procédé de facturation selon l'une des revendications 20 à 25, **caractérisé en ce que** les redevances de communications déterminées sont imputées directement à un compte prépayé (10162) dans la carte d'identification (10).

27. Procédé de facturation selon l'une des revendications 20 à 26, **caractérisé en ce que** les détails sur les communications nécessaires à la détermination des redevances de communications sont comprimés en justificatifs de facturation et envoyés à un collecteur de facturation (4).

28. Procédé de facturation selon la revendication précédente, **caractérisé en ce que** les justificatifs de facturation sont signés électroniquement par la carte d'identification (10).

29. Procédé de facturation selon la revendication précédente, **caractérisé en ce que** les justificatifs de facturation envoyés au collecteur de facturation (4) sont triés et transmis à un prestataire de services financiers approprié.

30. Procédé de facturation selon l'une des revendications 20 à 29, **caractérisé en ce que** l'utilisation de ressources existant sur la carte d'identification (10) et saris relation avec l'écoulement du trafic est également facturée avec le dispositif mentionné de mesure du temps (100).

FIG. 1

FIG. 2

FIG. 3